# EUROPÄISCHE PATENTSCHRIFT

(11) **EP 2 329 913 B1**
(45) Veröffentlichungstag und Bekanntmachung des Hinweises auf die Patenterteilung: **04.07.2012**
(21) Anmeldenummer: 10013327.1
(22) Anmeldetag: 05.10.2010
(51) Int. Cl.: B23Q 11/00, F16F 15/32, G01M 1/36

(54) **Vertikales Bearbeitungszentrum in Gantry-Bauform mit einer Auswuchteinrichtung für den Werkstücktisch**
Vertical processing centre in gantry form with a balancing device for the workpiece table
Centre de traitement vertical en forme de portique doté d'un dispositif d'équilibrage pour la table de pièce à usiner

(30) Priorität: 01.12.2009 DE 102009056492
(43) Veröffentlichungstag der Anmeldung: 08.06.2011
(73) Patentinhaber: Maschinenfabrik Berthold Hermle Aktiengesellschaft, D-78559 Gosheim (DE)
(72) Erfinder: Bernhard, Franz-Xaver, 78549 Spaichingen (DE); Schwörer, Tobias, 78598 Königsheim (DE)
(74) Vertreter: Hager, Thomas Johannes

(56) Entgegenhaltungen:
- EP-A2- 1 621 285
- US-A- 4 674 356

## Beschreibung

Die Erfindung betrifft ein vertikales Bearbeitungszentrum in Gantry-Bauform zum Fräsen, Bohren und Drehen, mit einem U-förmigen Maschinengestell mit zwei Seitenwandungen und einem an den Seitenwandungen gelagerten, um eine horizontale Achse schwenkbaren Brückenträger und einem im Brückenträger gelagerten, angetriebenen drehbaren Werkstücktisch, mit mindestens einem Messsystem für die Ermittlung der Drehzahl und/oder der Winkelposition des Werkstücktisches, und mit einer Aufspannfläche an der Tischoberfläche des Werkstücktisches zur Aufnahme und zum Befestigen von Werkstücken für die Fräs-, Bohr- und Drehbearbeitung, und mit mindestens einer Messeinrichtung im Brückenträger für die Ermittlung der Tischunwucht, und mit mindestens zwei Auswuchtgewichten am Werkstücktisch für die Kompensation der Tischunwucht und mit einer Steuer- und Regeleinrichtung für die Positionsbestimmung der Auswuchtgewichte am Werkstücktisch.

Der bisherige Sand der Technik bei einem vertikalen Bearbeitungszentrum in Gantry-Bauform zum Fräsen, Bohren und Drehen besteht darin, dass die Auswuchtgewichte auf der Aufspannfläche des Werkstücktisches manuell mit Schrauben an den T-Nuten des Werkstücktischs befestigt werden. Eine weitere Möglichkeit nach dem Stand der Technik besteht darin, die Auswuchtgewichte am äußeren Werkstücktischumfang axial anzuschrauben.

Diese Ausführung nach dem Stand der Technik hat den großen Nachteil, dass durch die Auswuchtgewichte auf der Spannfläche des Werkstücktisches die nutzbare Spannfläche für das Aufspannen eines Werkstückes beeinträchtigt wird. Des Weiteren können durch Auswuchtgewichte, die zum Beispiel am Außendurchmesser des Werkstücktisches angebracht sind, Störkonturen zwischen Werkstücktisch und Werkzeugspindel entstehen. Diese Störkonturen können unter Umständen die Bearbeitungsmöglichkeiten am Werkstück einschränken. Außerdem besteht die große Gefahr, dass bei der Drehbearbeitung - der Werkstücktisch muss prozessbedingt mit einer sehr großen Umfangsgeschwindigkeit rotieren bzw. drehen (z. B. v = 50 m/s) - ein Auswuchtgewicht aufgrund einer fehlerhaften Befestigung mit einer großen Kraft in den Arbeitsraum des Bearbeitungszentrums geschleudert werden kann. Die Kraft kann dabei unter Umständen so groß sein, dass die feste Blechumhausung des Bearbeitungszentrums durch das abgeschleuderte Auswuchtgewicht stark beschädigt wird. Es ergibt sich zum Beispiel bei einem Auswuchtgewicht von m = 1,0 kg, einer Umfangsgeschwindigkeit des Werkstücktisches von v = 50 m/s und einem Flugkreisdurchmesser (Tischdurchmesser, auf dem das Auswuchtgewicht befestigt ist) von 1,0 m eine rechnerische Aufprallenergie auf die Schutzumhausung (E = 0,5*m*v²) von 1.250 Joule.

Außerdem ist eine automatische Verstellung der Auswuchtgewichte beim Stand der Technik nur unter einem erhöhten Handlingsaufwand realisierbar. Eine automatische Verstellung der Auswuchtgewichte ist insbesondere beim Auswuchten nach dem sogenannten Spreizwinkelverfahren von großem Vorteil. Beim Spreizwinkelverfahren wird nicht wie üblich die Anzahl der Auswuchtgewichte am Werkstücktisch variiert, indem je nach festgestellter Unwucht die Anzahl der Auswuchtgewichte reduziert oder erhöht wird, sondern es sind auf dem Werkstücktisch mindestens zwei Auswuchtgewichte vorhanden, die nur in ihrer Winkelposition zueinander verstellt werden, d. h. es muss nur die Winkelposition der Auswuchtgewichte eingestellt werden, die anderen Parameter, wie zum Beispiel der Radius des Auswuchtgewichtes zur Drehachse des Werkstücktisches und die Masse der einzelnen Auswuchtgewichte, können fest vorgegeben sein.

In der EP 1 621 285 B1 ist ein vertikales Bearbeitungszentrum in Portal-Bauweise zum Fräsen, Bohren und Drehen mit einem in Maschinenlängsrichtung (X-Richtung) linear verfahrbaren drehbaren Werkstücktisch dargestellt. Der Ausgleich der Tischunwucht bei einem aufgespannten Werkstück erfolgt durch diverse Auswuchtgewichte, die auf der Aufspannfläche des Werkstücktisches an den T-Nuten der Aufspannfläche manuell über Schrauben befestigt werden. In der EP 1 621 285 B1 ist zwar ausgeführt, dass die Befestigung der Auswuchtgewichte auf der Aufspannfläche nicht auf die T-Nuten eingeschränkt ist, aber eine konkrete Angabe von möglichen Befestigungsvarianten fehlt komplett. Des Weiteren ist in der EP 1 621 285 B1 noch ausgeführt, dass die Befestigung der Auswuchtgewichte an den T-Nuten auch automatisch über eine Vorrichtung erfolgen kann. Eine Angabe, wie diese Vorrichtung auszugestalten ist, fehlt aber in der EP 1 621 285 B1 ebenfalls. Die Tischunwucht wird in der EP 1 621 285 B1 über den Schleppfehler der linearen Verfahrachse des Werkstücktisches ermittelt. Dazu wird der noch nicht ausgewuchtete Werkstücktisch mit dem aufgespannten Werkstück in eine definierte Rotation versetzt (Werkstücktisch dreht mit konstanter Umfangsgeschwindigkeit) und zusätzlich wird der rotierende, nicht ausgewuchtete Werkstücktisch noch mit einer definierten linearen Verfahrgeschwindigkeit alternierend in Maschinenlängsrichtung (X-Richtung) verfahren. Der durch die Unwucht verursachte Schleppfehler (Positionsabweichung vom Ist-Wert) in der linearen Verfahrachse in X-Richtung wird durch die Steuer- und Regeleinrichtung ausgewertet und über Vergleichstabellen in Verbindung mit dem Werkstückgewicht in einen Unwuchtswert umgerechtet. Über diesen Unwuchtswert wird dann durch die Steuer- und Regeleinrichtung die Masse und die Position der Auswuchtgewichte auf dem drehbaren Werkstücktisch ermittelt und ausgegeben. Mit diesen Angaben ist der Maschinenbediener dann in der Lage, den Werkstücktisch entsprechend genau manuell auszuwuchten, so dass ein optimales Bearbeitungsergebnis erzielt werden kann und die Tischlagerung nicht unnötig stark durch eine Unwucht belastet wird.

Ausgehend von diesem Stand der Technik liegt der vorliegenden Erfindung die Aufgabe zugrunde, eine Vorrichtung zu schaffen, mit der eine Platz sparende, kollisionsfreie, sichere und leicht automatisierbare Befestigung von Auswuchtgewichten an einem drehbaren Werkstücktisch möglich wird.

Diese Aufgabe wird bei einem vertikalen Bearbeitungszentrum in Gantry-Bauform zum Fräsen, Bohren und Drehen, mit einem U-förmigen Maschinengestell mit zwei Seitenwandungen und einem an den Seitenwandungen gelagerten, um eine horizontale Achse schwenkbaren Brückenträger und einem im Brückenträger gelagerten, angetriebenen drehbaren Werkstücktisch, mit mindestens einem Messsystem für die Ermittlung der Drehzahl und/oder der Winkelposition des Werkstücktisches, und mit einer Aufspannfläche an der Tischoberfläche auf des Werkstücktisches zur Aufnahme und zum Befestigen von Werkstücken für die Fräs-, Bohr- und Drehbearbeitung, und mit mindestens einer Messeinrichtung im Brückenträger für die Ermittlung der Tischunwucht, und mit mindestens zwei Auswuchtgewichten am Werkstücktisch für die Kompensation der Tischunwucht und mit einer Steuer- und Regeleinrichtung für die Positionsbestimmung der Auswuchtgewichte am Werkstücktisch erfindungsgemäß dadurch gelöst, dass unterhalb der Tischoberfläche eine zum Drehpunkt des Werkstücktisches konzentrische und kreisringförmige Aufnahme-Nut mit einem Hinterschnitt eingearbeitet ist, dass die Auswuchtgewichte in ihrer äußeren geometrischen Form so ausgestaltet sind, dass sie beweglich in der Aufnahme-Nut mit Hinterschnitt geführt, mit einen Kontaktfläche (22) des Auswuchtsgewichtes (4) gegen eine Kante des Kinterschnitts (7) gedrücht und in horizontaler und vertikaler Richtung gegen Herausfallen gesichert sind, und dass die Auswuchtgewichte in der Aufnahme-Nut in eine von der Steuer- und Regeleinrichtung vorbestimmte Winkelposition verfahrbar und in dieser Winkelposition kraft- oder formschlüssig in der Aufnahme-Nut festlegbar sind.

Infolge dieser Ausgestaltung ist es ohne großen Aufwand möglich, die Auswuchtgewichte sicher und einfach an dem Werkstücktisch anzubringen und in ihrer Winkellage zueinander zu verstellen. Aufgrund der erfindungsgemäßen Ausgestaltung ist es auch ohne größeren Aufwand möglich, die Verstellung der Auswuchtgewichte beim Auswuchten im Spreizwinkelverfahren zu automatisieren.

Vorteilhafte Weiterbildungen ergeben sich aus den Unteransprüchen.

Der Werkstücktisch ist vorzugsweise mittels eines Torque-Motors antreibbar.

Gemäß einer vorteilhaften Weiterbildung ist die Aufnahme-Nut mit einem Hinterschnitt versehen, am äußeren Umfang des Werkstücktisches angeordnet und umlaufend ausgebildet.

Das Verfahren und Festlegen der Auswuchtgewichte kann von Hand durchgeführt werden, vorzugsweise erfolgt es jedoch automatisch.

Gemäß einer weiteren bevorzugten Ausgestaltung ist die Unwucht mit Hilfe eines Beschleunigungs- oder eines Geschwindigkeitssensors, der vorzugsweise im Brückenträger angeordnet ist, über die Steuer- und Regeleinrichtung ermittelbar. Der Geschwindigkeitssensor arbeitet dabei vorteilhafterweise nach einem elektro-dynamischen Messprinzip.

Der Beschleunigungssensor kann gemäß einer bevorzugten Weiterbildung als piezoelektrischer Beschleunigungssensor ausgebildet sein. Bei einem piezoelektrischen Beschleunigungssensor werden über ein piezokeramisches Sensorplättchen dynamische Druckschwankungen in elektrische Signale umgewandelt, die dann entsprechend weiterverarbeitet werden können.

Der Beschleunigungssensor kann gemäß einer bevorzugten Weiterbildung als kapazitiver Beschleunigungssensor ausgebildet sein.

Nach einer vorteilhaften Ausgestaltung ist in der Aufnahme-Nut mindestens eine speziell ausgebildete Beladestelle eingearbeitet, über welche die Auswuchtgewichte in die Aufnahme-Nut einführbar sind.

Gemäß einer weiteren bevorzugten Ausbildung ist die Beladestelle mittels einer Einlegesicherung zumindest teilweise verschließbar, so dass ein fehlerhaft befestigtes Ausgleichsgewicht nicht undefiniert über die Beladestelle herausfallen kann.

Gemäß einer weiteren bevorzugten Ausbildung ist die Einlegesicherung in Form eines federbetätigten Einrückbolzens gestaltet. Durch die Ausgestaltung als federbetätigter Einrückbolzen wird gleichzeitig zur Einlegesicherung auch noch eine Einlegehilfe realisiert, da der federbetätigte Einrückbolzen das Einfädeln der Auswuchtgewichte in die Aufnahme-Nut erleichtert.

Gemäß einer weiteren bevorzugten Ausbildung können die Auswuchtgewichte durch jeweils ein an den Auswuchtgewichten angeordnetes, federbetätigtes Fixierelement oder durch jeweils eine an den Auswuchtgewichten angeordnete Befestigungsschraube in der Aufnahme-Nut kraft- oder formschlüssig gegen Verschieben gesichert sein.

Gemäß einer weiteren bevorzugten Ausbildung können die Auswuchtgewichte über eine hydraulisch- oder pneumatisch verfahrbare Kolben-Zylindereinheit, die vorzugsweise im Brückenträger angeordnet ist, von der Aufnahme-Nut des drehbaren Werkstücktisches abgehoben und somit ausgekuppelt werden, so dass der Werkstücktisch relativ gegenüber dem Ausgleichsgewicht verdreht werden kann. Mit dieser Maßnahme kann mit einfachen Mitteln ein automatisches Verstellen der Winkellage der Auswuchtgewichte zueinander erfolgen.

Gemäß einer weiteren bevorzugten Ausbildung besitzt das Auswuchtgewicht eine in den Hinterschnitt der Aufnahme-Nut eingreifende Kontaktfläche mit einem relativ groβen Reibungskoeffizient, so dass ein Kraftschluss zwischen dem Auswuchtgewicht und der Aufnahme-Nut mit relativ geringen Andrückkräften realisierbar ist.

Gemäß einer alternativen Ausbildung besitzt die Kontaktfläche des federbetätigten Fixierelementes einen relativ kleinen Reibungskoeffizient, so dass im ausgekuppelten Zustand, in dem das Ausgleichsgewicht von der Aufnahme-Nut abhebt und über die Zylinder-Kolbeneinheit fest mit dem Brückenträger verbunden ist, der Werkstücktisch ohne Probleme über das federbelastete Fixierelement gleiten kann.

Gemäß einer weiteren bevorzugten Ausbildung ist das Messsystem für die Ermittlung der Drehzahl und/oder der Winkelposition des Werkstücktisches als Drehgeber ausgebildet und an der Antriebswelle des Werkstücktisches anbringbar.

Weitere Merkmale, Vorteile und Ausgestaltungen ergeben sich aus der nachfolgenden Beschreibung. Es zeigen:
- Figur 1: einen Werkstücktisch eines vertikalen Bearbeitungszentrums in perspektivischer Ansicht,
- Figur 2: ein Vertikalschnitt durch den Werkstücktisch nach Figur 1 gemäß einer ersten Ausführungsform,
- Figuren 2a und 2b: eine erste Ausführungsform einer Beladestelle mit einer Sicherung gegen Herausfallen des Auswuchtgewichts,
- Figur 2c: eine zweite Ausführungsform einer Beladestelle einer Sicherung gegen Herausfallen des Auswuchtgewichts,
- Figur 3: ein Vertikalschnitt durch den Werkstücktisch nach Figur 1 gemäß einer zweiten Ausführungsform in einem ersten Zustand,
- Figur 4: ein Vertikalschnitt durch den Werkstücktisch nach Figur 1 gemäß einer zweiten Ausführungsform in einem zweiten Zustand,
- Figur 5: ein Vertikalschnitt durch den Werkstücktisch nach Figur 1 gemäß einer dritten Ausführungsform, und
- Figur 6: eine schematisierte Darstellung vor und nach dem Auswuchtvor- gang.

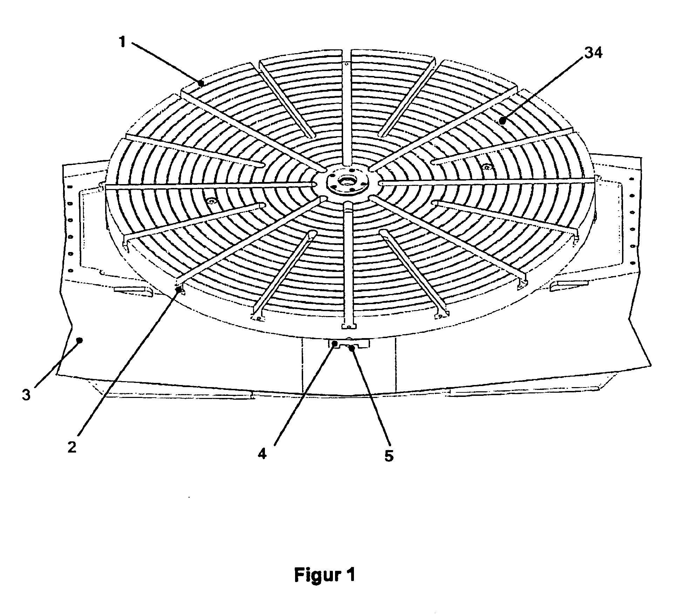

Figur 1 zeigt einen Werkstücktisch 1 eines vertikalen Bearbeitungszentrums in Gantry-Bauform zum Fräsen, Bohren und Drehen. Derartige Bearbeitungszentren sind von ihrem Aufbau her bekannt und werden daher im Folgenden nicht näher beschrieben.

Im vorliegenden Ausführungsbeispiel ist der Werkstücktisch 1 kreisförmig ausgebildet und weist an seiner Aufspannfläche 34 radial verlaufende T-Nuten 2 auf, die zur Befestigung eines nicht dargestellten Werkstücks dienen.

Der Werkstücktisch 1 ist auf einem Brückenträger 3 gelagert, der an Seitenwandungen des Bearbeitungszentrums um eine horizontale Achse schwenkbar gelagert ist.

An der der Aufspannfläche 34 gegenüberliegenden Rückseite des Werkstücktisches 1 sind Auswuchtgewichte 4 über Befestigungsschrauben 5 festgelegt. Dazu ist eine unterhalb der Aufspannfläche 34 am äußeren Umfang des Werkstücktisches 1 umlaufende und zum Drehpunkt des Werkstücktisches 1 konzentrische, kreisringförmige Aufnahme-Nut 6 vorgesehen, die mit einem Hinterschnitt 7 versehen ist.

Mittels der Befestigungsschrauben 5, die sich an einer Kontaktfläche 23 am Werkstücktisch 1 abstützen, wird eine Kontaktfläche 22 des Auswuchtgewichts 4 gegen die Unterkante des Hinterschnitts 7 gedrückt, so dass das Auswuchtgewicht 4 sicher in der Aufnahme-Nut 4 gehalten ist. Um einen guten Kraftschluss zwischen dem Auswuchtgewicht 4 und der Aufnahme-Nut 6 mit relativ geringen Andrückkräften realisieren zu können, besitzt die in den Hinterschnitt 7 der Aufnahme-Nut 6 eingreifende Kontaktfläche 22 einen relativ großen Reibungskoeffizient.

Unterhalb des Werkstücktisches 1 ist im Brückenträger 3 ein Antriebsmotor 8, vorzugsweise ein Torque-Motor, angebracht, mit dessen Hilfe der Werkstücktisches 1 um eine vertikal verlaufende C-Achse in beiden Richtungen drehbar ist. Mit dem Antriebsmotor 8 ist ein Drehgeber 9 verbunden, um die jeweilige Winkelstellung und die Drehstellung des Werkstücktisches 1 ermitteln zu können.

An dem Brückenträger 3 ist weiterhin ein Unwuchtsensor 10 vorgesehen, der vorzugsweise der Aufnahme-Nut 6 in dem Werkstücktisch 1 gegenüber liegt.

Von dem Unwuchtsensor 10 führt eine Signalleitung 11 zu einem Signaleingang 15 einer Steuer- und Regeleinrichtung 14. Zu dem Signaleingang 15 führt auch eine weitere Signalleitung 12, die von dem Drehgeber 8 kommt. Von einem Signalausgang 16 der Steuer- und Regeleinrichtung 14 führt eine Signalleitung 13 zu dem Antriebsmotor 8.

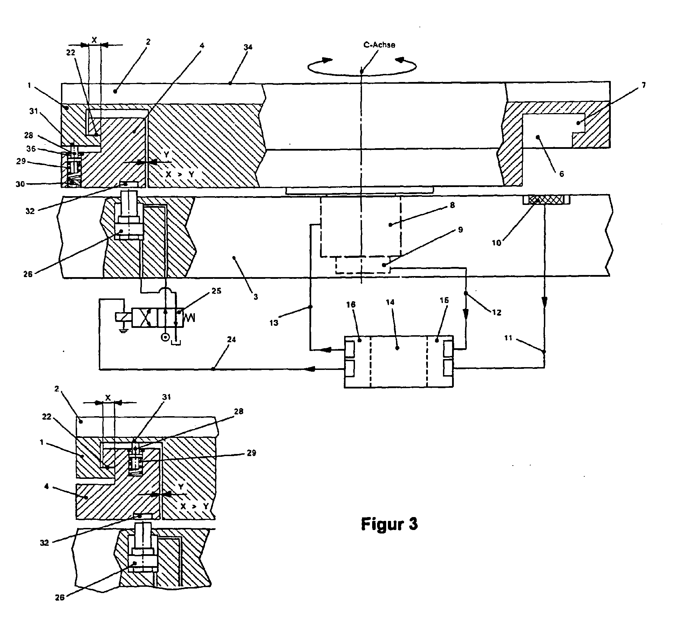

Das Einsetzen eines Auswuchtgewichtes 4 in die Aufnahme-Nut 6 erfolgt in der Regel händisch, während das Positionieren des Auswuchtgewichtes 4 in der Aufnahme-Nut 6 händisch oder auch automatisch erfolgen kann, wie später noch im Zusammenhang mit den Figuren 3 bis 5 beschrieben werden wird.

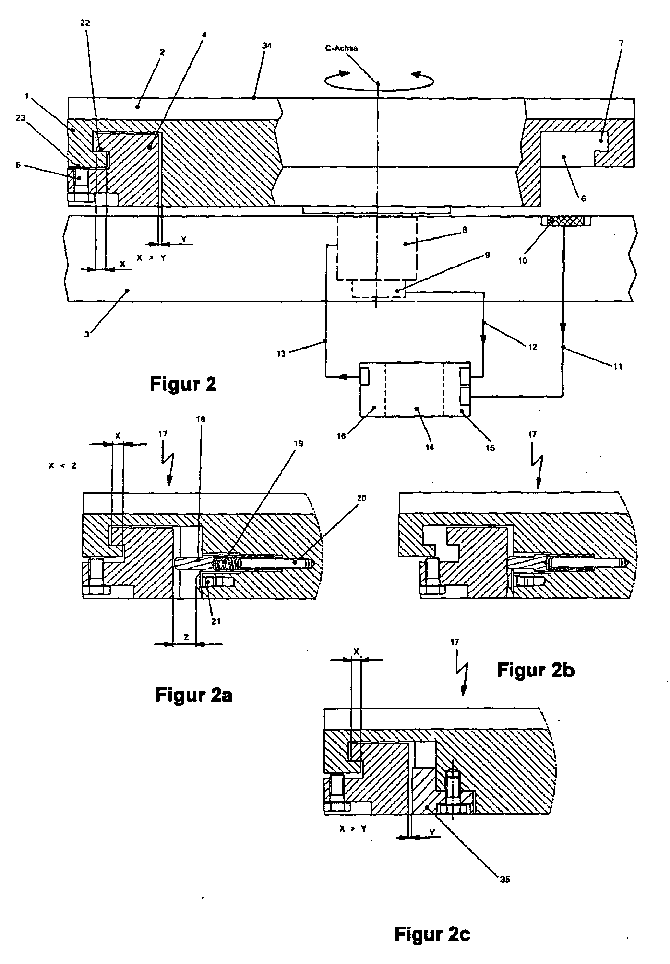

Die Figuren 2a, 2b und 2c zeigen mindestens eine in der Aufnahme-Nut 6 eingearbeitete und speziell ausgebildete Beladestelle, über welche Auswuchtgewichte 4 in die Aufnahme-Nut 6 einführbar sind. Über eine Einlegesicherung 17 kann die Beladestelle zumindest teilweise verschlossen werden, so dass das Auswuchtgewicht 4 nicht undefiniert über die Beladestelle herausfallen kann. Die Einlegesicherung 17 kann dabei in Form eines federbetätigten Einrückbolzens 18 ausgestaltet sein.

Gemäß einer ersten, in den Figuren 2a und 2b dargestellten Ausführungsform ist der horizontal verschiebbare Einrückbolzen 18 von einer Druckfeder 19 in Richtung auf den Außenumfang des Werkstücktisches 1 belastet. Die Druckfeder 19 ist auf einem Führungsstift 20 geführt, der ebenfalls horizontal ausgerichtet ist. Eine Fixierschraube 21 begrenzt die Bewegung des Einrückbolzens 18 nach außen. Durch den von der Druckfeder 19 belasteten Einrückbolzen 18 wird das Auswuchtgewicht 4 sicher in der Aufnahme-Nut 6 gehalten. Da der Spalt z zwischen dem Kopf der Fixierschraube 21 und der Hinterkante des eingesetzten Auswuchtgewichts 4 größer ist als die Tiefe x des Hinterschnitts 7, kann einerseits das Auswuchtgewicht 4 einfach in die Aufnahme-Nut 6 eingeführt werden, andererseits wird das Auswuchtgewicht 4 durch den Einrückbolzen 18 in den Hinterschnitt 7 gedrängt, wodurch ein Herausfallen des Auswuchtgewichts 4 vermieden werden kann. Durch die federbelastete Ausgestaltung des Einrückbolzens 18 wird gleichzeitig eine Einlegehilfe realisiert, da der federbelastete Einrückbolzen 18 das Einfädeln des Ausgleichsgewichtes 4 in die Aufnahme-Nut 6 erleichtert.

Gemäß einer zweiten, in der Figur 2c dargestellten Ausführungsform weist die Einlegesicherung 17 einen Einsatz 35 auf, der mit dem Werkstücktisch 1 verschraubt ist. Durch diesen Einsatz 35 wird der Spalt z auf einen Spalt y verringert, der kleiner ist als die Tiefe x des Hinterschnitts 7, so dass der Auswuchtkörper 4 nicht aus der Aufnahme-Nut 6 heraus fallen kann.

In den Figuren 3 bis 5 sind Ausführungsformen beschrieben, mit Hilfe derer eine automatische Positionierung der Auswuchtgewichte 4 ermöglicht wird.

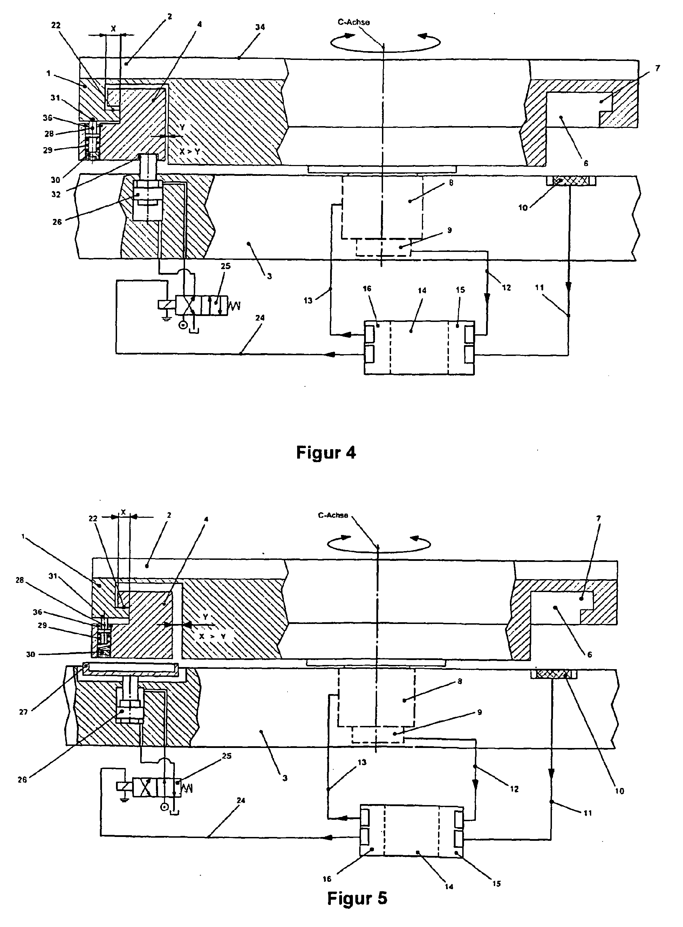

Dazu geht von dem Signalausgang 16 der Steuer- und Regeleinrichtung 14 eine Signalleitung 24 zu einem Stellventil 25, über das eine Kolben-Zylindereinheit 26 betätigt werden kann, die in eine Fixierbohrung 32 am Auswuchtgewicht 4 eingreifen kann. Greift die Kolben-Zylindereinheit 26 in die Fixierbohrung 32 am Auswuchtgewicht 4 ein, wie es in Figur 4 zu sehen ist, wird das Auswuchtgewicht 4 von der Kolben-Zylindereinheit 26 von der Aufnahme-Nut 6 des drehbaren Werkstücktisches 1 abgehoben und gleichzeitig festgehalten, so dass der Werkstücktisch 1 gegenüber dem Auswuchtgewicht 4 gedreht werden kann. Somit kann die Position der Auswuchtgewichte 4 an dem Werkstücktisch 1 verändert werden. Mit dieser Maßnahme kann mit einfachen Mitteln ein automatisches Verstellen der Winkellage der Auswuchtgewichte 4 zueinander erfolgen

Bei dieser Ausführungsform ist es vorteilhaft, wenn die Kontaktfläche 31 des federbetätigten Fixierelementes 28 einen relativ kleinen Reibungskoeffizienten aufweist, so dass im ausgekuppelten Zustand, in dem das Auswuchtgewicht 4 von der Aufnahme-Nut 6 abgehoben und über die Zylinder-Kolbeneinheit 26 fest mit dem Brückenträger 3 verbunden ist, der Werkstücktisch 1 ohne Probleme über die Auswuchtgewichte 4 gleiten kann.

Um das Auswuchtgewicht 4 lagesicher in der Aufnahme-Nut 6 zu positionieren, ist im Auswuchtgewicht 4 ein Fixierelement 28 gelagert, das von einer Druckfeder 29 und einer Andrückschraube 30 gegen eine Kontaktfläche 31 am Werkstücktisch 1 gedrückt wird. Damit das Fixierelement 28 nicht aus dem Auswuchtgewicht 4 herausfallen kann, wird es von einem Sicherungsring 36 in einer Bohrung im Auswuchtgewicht 4 gehalten.

Eine alternative Ausführungsform zur Positionierung der Auswuchtgewichte 4 ist in Figur 5 gezeigt. Dabei ist an der Kolben-Zylindereinheit 26 ein tellerartiges Aufnahmeteil 27 vorgesehen, welches sowohl zum Einsetzen als auch zum Positionieren des Auswuchtgewichts 4 verwendet werden kann.

In der in den Figuren 3 und 5 gezeigten Stellung ist die Kolben-Zylindereinheit 26 eingefahren. In dieser Stellung wird das Auswuchtgewicht 4 durch das Fixierelement 28 in der Aufnahme-Nut 4 gehalten. Wird die Kolben-Zylindereinheit 26 ausgefahren, wie es in Figur 4 gezeigt ist, wird das Auswuchtgewicht 4 gegen die Kraft der Druckfeder 29 des Fixierelementes 28 nach oben bewegt, so dass das Auswuchtgewicht 4 von der Kontaktfläche 22 frei kommt. Wird das Auswuchtgewicht 4 von der Kolben-Zylindereinheit 26 bzw. dem Aufnahmeelement 27 in dieser Stellung gehalten, kann der Werkstücktisch 1 gegenüber dem Auswuchtgewicht 4 verdreht werden, wodurch das Auswuchten erfolgen kann.

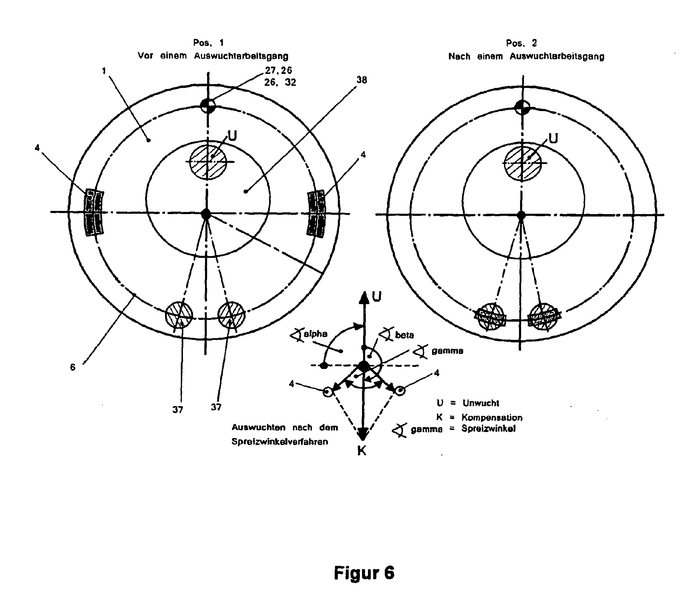

Der Auswuchtvorgang ist im Einzelnen in Figur 6 erläutert. Die linke Seite der Figur 6 zeigt den Werkstücktisch 1 vor dem Auswuchtvorgang. Auf dem Werkstücktisch 1 ist ein auszuwuchtendes Werkstück 38 aufgespannt. Zwei Auswuchtgewichte 4 befinden sich diametral gegenüberliegend in der Aufnahme-Nut 6. Außerdem ist eine Kolben-Zylindereinheit 26 zum Eingriff in die im Auswuchtgewicht 4 vorgesehene Fixierbohrung 32 bzw. ein Aufnahmeteil 27 zur Aufnahme des Auswuchtgewichts 4 vorgesehen.

Das Auswuchten erfolgt mittels des Spreizwinkelverfahrens. Dabei wird die Unwucht mit Hilfe eines Beschleunigungs- oder eines Geschwindigkeitssensors, der vorzugsweise im Brückenträger 3 angeordnet ist, über die Steuer- und Regeleinrichtung 14 ermittelt. Der Geschwindigkeitssensor arbeitet dabei vorteilhafterweise nach einem elektro-dynamischen Messprinzip. Der Beschleunigungssensor kann als piezoelektrischer Beschleunigungssensor ausgebildet sein. Bei einem piezoelektrischen Beschleunigungssensor werden über ein piezokeramisches Sensorplättchen dynamische Druckschwankungen in elektrische Signale umgewandelt, die dann entsprechend weiterverarbeitet werden können. Der Beschleunigungssensor kann auch als kapazitiver Beschleunigungssensor ausgebildet sein.

Nachdem die berechnete Position 37 für die Auswuchtgewichte 4 derart ermittelt worden ist, ergreift die Kolben-Zylindereinheit 26 bzw. das Aufnahmeteil 27 eines der Ausgleichsgewichte 4 und hält es fest, während der Werkstücktisch 1 so lange gedreht wird, bis das Ausgleichsgewicht 4 seine richtige Position erreicht hat. Dann wird die Kolben-Zylindereinheit 26 eingefahren, wodurch das Auswuchtgewicht 4 infolge des nunmehr wieder entlasteten Fixierelements 28 in der Aufnahme-Nut 6 festgelegt wird. Mit dem zweiten bzw. weiteren Ausgleichsgewichten 4 wird genauso verfahren, bis der Werkstücktisch 1 vollständig ausgewuchtet ist. Dieser Zustand ist im rechten Teil der Figur 6 dargestellt.

### Bezugszeichenliste:

- 1: Werkstücktisch
- 2: T-Nut
- 3: Brückenträger
- 4: Auswuchtgewicht
- 5: Befestigungsschraube
- 6: Aufnahme-Nut
- 7: Hinterschnitt
- 8: Antriebsmotor
- 9: Drehgeber
- 10: Unwuchtsensor
- 11: Signalleitung
- 12: Signalleitung
- 13: Signalleitung
- 14: Steuer- und Regeleinrichtung
- 15: Signaleingang
- 16: Signalausgang
- 17: Einlegesicherung
- 18: Einrückbolzen
- 19: Druckfeder
- 20: Führungsstift
- 21: Fixierschraube
- 22: Kontaktfläche Ausgleichsgewicht zu Werkstücktisch
- 23: Kontaktfläche Befestigungsschraube zu Werkstücktisch
- 24: Signalleitung
- 25: Stellventil
- 26: Kolben-Zylindereinheit
- 27: Aufnahmeteil
- 28: Fixierelement
- 29: Druckfeder
- 30: Andrückschraube
- 31: Kontaktfläche Fixierelement zu Werkstücktisch
- 32: Fixierbohrung
- 34: Aufspannfläche
- 35: Einsatz
- 36: Sicherungsring
- 37: Berechnete Position für Ausgleichsgewicht
- 38: Auszuwuchtendes Werkstück

## Patentansprüche

1. Vertikales Bearbeitungszentrum in Gantry-Bauform zum Fräsen, Bohren und Drehen, mit einem U-förmigen Maschinengestell mit zwei Seitenwandungen und einem an den Seitenwandungen gelagerten, um eine horizontale Achse schwenkbaren Brückenträger (3) und einem im Brückenträger (3) gelagerten, angetriebenen drehbaren Werkstücktisch (1), mit mindestens einem Messsystem für die Ermittlung der Drehzahl und/oder der Winkelposition des Werkstücktisches (1), und mit einer Aufspannfläche (34) an der Tischoberfläche des Werkstücktisches (1) zur Aufnahme und zum Befestigen von Werkstücken für die Fräs-, Bohr- und Drehbearbeitung, und mit mindestens einer Messeinrichtung im Brückenträger (3) für die Ermittlung der Tischunwucht, und mit mindestens zwei Auswuchtgewichten (4) am Werkstücktisch (1) für die Kompensation der Tischunwucht und mit einer Steuer- und Regeleinrichtung (14) für die Positionsbestimmung der Auswuchtgewichte (4) am Werkstücktisch (1),
**dadurch gekennzeichnet, dass**
unterhalb der Tischoberfläche eine zum Drehpunkt des Werkstücktisches (1) konzentrische und kreisringförmige Aufnahme-Nut (6) mit einem Hinterschnitt (7) eingearbeitet ist, dass die Auswuchtgewichte (4) in ihrer äußeren geometrischen Form so ausgestaltet sind, dass sie beweglich in der Aufnahme-Nut (6) mit Hinterschnitt (7) geführt, mit einer Kontaktfläche (22) des Auswuchtgewichtes (4) gegen eine Kante des Hinterschnitts (7) gedrückt und in horizontaler und vertikaler Richtung gegen Herausfallen gesichert sind, und dass die Auswuchtgewichte (4) in der Aufnahme-Nut (6) in eine von der Steuer- und Regeleinrichtung (14) vorbestimmte Winkelposition verfahrbar und in dieser Winkelposition kraft- oder formschlüssig in der Aufnahme-Nut (6) festlegbar sind.

2. Vertikales Bearbeitungszentrum nach Anspruch 1, **dadurch gekennzeichnet, dass** der Werkstücktisch (1) mittels eines Torque-Motors antreibbar ist.

3. Vertikales Bearbeitungszentrum nach Anspruch 1 oder 2, **dadurch gekennzeichnet, dass** die Aufnahme-Nut (6) mit einem Hinterschnitt (7) versehen, am äußeren Umfang des Werkstücktisches (1) angeordnet und umlaufend ausgebildet ist.

4. Vertikales Bearbeitungszentrum nach einem der Ansprüche 1 bis 3, **dadurch gekennzeichnet, dass** das Verfahren und Festlegen der Auswuchtgewichte (4) automatisch durchführbar ist.

5. Vertikales Bearbeitungszentrum nach einem der vorhergehenden Ansprüche, **dadurch gekennzeichnet, dass** die Unwucht mit Hilfe eines Beschleunigungs- oder eines Geschwindigkeitssensors, der vorzugsweise im Brückenträger (3) angeordnet ist, über die Steuer- und Regeleinrichtung (14) ermittelbar ist.

6. Vertikales Bearbeitungszentrum nach Anspruch 5, **dadurch gekennzeichnet, dass** der Geschwindigkeitssensor nach einem elektro-dynamischen Messprinzip arbeitet.

7. Vertikales Bearbeitungszentrum nach Anspruch 6, **dadurch gekennzeichnet, dass** der Beschleunigungssensor als piezoelektrischer Beschleunigungssensor ausgebildet ist.

8. Vertikales Bearbeitungszentrum nach Anspruch 6, **dadurch gekennzeichnet, dass** der Beschleunigungssensor als kapazitiver Beschleunigungssensor ausgebildet ist.

9. Vertikales Bearbeitungszentrum nach einem der Ansprüche 1 bis 8, **dadurch gekennzeichnet, dass** in der Aufnahme-Nut (6) mindestens eine speziell ausgebildete Beladestelle eingearbeitet ist, über welche Auswuchtgewichte (4) in die Aufnahme-Nut (6) einführbar sind.

10. Vertikales Bearbeitungszentrum nach Anspruch 9, **dadurch gekennzeichnet, dass** die Beladestelle mittels einer Einlegesicherung (17) zumindest teilweise verschließbar ist, so dass das Ausgleichsgewicht (4) nicht undefiniert über die Beladestelle herausfallen kann.

11. Vertikales Bearbeitungszentrum nach Anspruch 10, **dadurch gekennzeichnet, dass** die Einlegesicherung (17) in Form eines federbetätigten Einrückbolzens (18) gestaltet ist.

12. Vertikales Bearbeitungszentrum nach einem der Ansprüche 1 bis 11, **dadurch gekennzeichnet, dass** die Auswuchtgewichte (4) durch jeweils ein an den Auswuchtgewichten (4) angeordnetes, federbetätigtes Fixierelement (28) in der Aufnahme-Nut (6) kraft- oder formschlüssig gegen Verschieben gesichert sind.

13. Vertikales Bearbeitungszentrum nach einem der vorhergehenden Ansprüche 1 bis 11, **dadurch gekennzeichnet, dass** die Auswuchtgewichte (4) durch jeweils eine an den Auswuchtgewichten (4) angeordnete Befestigungsschraube (5) in der Aufnahme-Nut (6) kraft- oder formschlüssig gegen Verschieben gesichert sein.

14. Vertikales Bearbeitungszentrum nach einem der vorhergehenden Ansprüche 1 bis 13, **dadurch gekennzeichnet, dass** die Auswuchtgewichte (4) über eine hydraulisch- oder pneumatisch verfahrbare Kolben-Zylindereinheit (26), die vorzugsweise im Brückenträger (3) angeordnet ist, von der Aufnahme-Nut (6) des drehbaren Werkstücktisches (1) abhebar und auskuppelbar sind, so dass der Werkstücktisch (1) relativ gegenüber dem Ausgleichsgewicht (4) verdrehbar ist.

15. Vertikales Bearbeitungszentrum nach einem der vorhergehenden Ansprüche 1 bis 14, **dadurch gekennzeichnet, dass** das Auswuchtgewicht (4) eine in den Hinterschnitt (7) der Aufnahme-Nut (6) eingreifende Kontaktfläche (22) mit einem relativ großen Reibungskoeffizient besitzt, so dass ein Kraftschluss zwischen dem Auswuchtgewicht (4) und der Aufnahme-Nut (6) mit relativ geringen Andrückkräften realisierbar ist.

16. Vertikales Bearbeitungszentrum nach einem der vorhergehenden Ansprüche 1 bis 14, **dadurch gekennzeichnet, dass** das federbetätigte Fixierelement (28) eine in den Hinterschnitt (7) der Aufnahme-Nut (6) eingreifende Kontaktfläche (31) mit einem relativ kleinen Reibungskoeffizient besitzt, so dass im ausgekuppelten Zustand, in dem das Ausgleichsgewicht (4) von der Aufnahme-Nut (6) abhebt und über die Zylinder-Kolbeneinheit (26) fest mit dem Brückenträger (3) verbunden ist, der Werkstücktisch (1) ohne Probleme über das federbelastete Fixierelement (28) gleiten kann.

17. Vertikales Bearbeitungszentrum nach einem der vorhergehenden Ansprüche 1 bis 16, **dadurch gekennzeichnet, dass** das Messsystem für die Ermittlung der Drehzahl und/oder der Winkelposition des Werkstücktisches (1) als Drehgeber (9) ausgebildet und an der Antriebswelle des Werkstücktisches (1) anbringbar ist.

## Claims

1. A vertical processing center in gantry form for milling, drilling and turning, comprising a U-shaped machine frame with two sidewalls and a bridge support (3) which is mounted on the sidewalls and is pivotable about a horizontal axis, and a driven rotatable workpiece table (1) mounted in the bridge support (3), comprising at least one measurement system for determining the rotational speed and/or the angular position of the workpiece table (1), and comprising a clamping area (34) on the table surface of the workpiece table (1) for receiving and fastening workpieces for a milling, drilling and turning treatment, and comprising at least one measuring device in the bridge support (4) for determining the table imbalance, and comprising at least two balancing weights (4) on the workpiece table (1) for compensating for the table imbalance, and comprising a controlling and regulating device (14) for determining the position of the balancing weights (4) on the workpiece table (1)
**characterized in that**
underneath the table surface a circular receiving groove (6) which is concentric to the pivot point of the workpiece table (1) is incorporated with an undercut (7), that the balancing weights (4) in their external geometric shape are configured such that they are movably guided in the receiving groove (6) with undercut (7), pressed with a contact surface (22) of the balancing weight (4) against an edge of the undercut (7) and are secured in horizontal and vertical direction from being dropped out, and that the balancing weights (4) in the receiving groove (6) are movable into an angular position predetermined by the controlling and regulating device (14) and are fixable in said angular position in force-fit or form-fit manner in the receiving groove (6).

2. The vertical processing center according to claim 1, **characterized in that** the workpiece table (1) is drivable by means of a torque motor.

3. The vertical processing center according to claim 1 or 2, **characterized in that** the receiving groove (6) is provided with an undercut (7), arranged on the outer periphery of the workpiece table (1) and configured to be circumferential.

4. The vertical processing center according to any one of claims 1 to 3, **characterized in that** displacement and fixation of the balancing weights (4) can be carried out automatically.

5. The vertical processing center according to any one of the preceding claims, **characterized in that** the imbalance can be determined via the controlling and regulating device (14) with the help of an acceleration or speed sensor which is preferably arranged in the bridge support (3).

6. The vertical processing center according to claim 5, **characterized in that** the speed sensor works according to an electrodynamic measuring principle.

7. The vertical processing center according to claim 6, **characterized in that** the acceleration sensor is configured as a piezoelectric acceleration sensor.

8. The vertical processing center according to claim 6, **characterized in that** the acceleration sensor is configured as a capacitive acceleration sensor.

9. The vertical processing center according to any one of claims 1 to 8, **characterized in that** the receiving groove (6) has incorporated thereinto at least one specifically configured loading point through which balancing weights (4) are insertable into the receiving groove (6).

10. The vertical processing center according to claim 9, **characterized in that** the loading point can be closed by means of an insertion lock (17) at least in part, so that the balancing weight (4) cannot drop out in an undefined manner via the loading point.

11. The vertical processing center according to claim 10, **characterized in that** the insertion lock (17) is designed in the form of a spring-actuated engagement bolt (18).

12. The vertical processing center according to any one of claims 1 to 11, **characterized in that** the balancing weights (4) are secured in the receiving groove (6) in force-fit or form-fit manner against displacement by a respective spring-actuated fixing element (28) which is arranged on the balancing weights (4).

13. The vertical processing center according to any one of the preceding claims 1 to 11, **characterized in that** the balancing weights (4) are secured in the receiving groove (6) in force-fit or form-fit manner against displacement by a respective fastening screw (5) which is arranged on the balancing weights (4).

14. The vertical processing center according to any one of the preceding claims 1 to 13, **characterized in that** the balancing weights (4) can be lifted and decoupled from the receiving groove (6) of the rotatable workpiece table (1) via a hydraulically or pneumatically movable piston cylinder unit (26), which is preferably arranged in the bridge support (3), so that the workpiece table (1) is rotatable relative to the balancing weight (4).

15. The vertical processing center according to any one of the preceding claims 1 to 14, **characterized in that** the balancing weight (4) has a contact surface (22) which engages into the undercut (7) of the receiving groove (6) and has a relatively great coefficient of friction, so that a force-fit connection can be established between the balancing weight (4) and the receiving groove (6) with relatively small pressing forces.

16. The vertical processing center according to any one of the preceding claims 1 to 14, **characterized in that** the spring-actuated fixing element (28) has a contact surface (31) which engages into the undercut (7) of the receiving groove (6) and has a relatively small coefficient of friction, so that in the decoupled state in which the balancing weight (4) lifts from the receiving groove (6) and is firmly connected via the cylinder piston unit (26) to the bridge support (3), the workpiece (1) can slide without any problems over the spring-loaded fixing element (28).

17. The vertical processing center according to any one of the preceding claims 1 to 16, **characterized in that** the measuring system for determining the rotational speed and/or the angular position of the workpiece table (1) is configured as a rotary encoder (9) and can be mounted on the drive shaft of the workpiece table (1).

## Revendications

1. Centre d'usinage vertical sous forme de portique destiné au fraisage, perçage et tournage, comportant un bâti de machine en forme de U doté de deux parois latérales et d'une poutre de pont (3) montée au niveau des parois latérales et pouvant pivoter autour d'un axe horizontal et d'une table porte-pièce (1) pouvant être entraînée en rotation, montée dans la poutre de pont (3), comportant au moins un système de mesure servant à déterminer le nombre de tours et/ou la position angulaire de la table porte-pièce (1), et comportant une surface de serrage (34) à la surface de la table porte-pièce (1) servant à recevoir et à fixer des pièces à usiner pour l'usinage par fraisage, perçage et tournage, et comportant au moins un dispositif de mesure dans la poutre de pont (3) servant à déterminer un défaut d'équilibrage de la table, et comportant au moins deux masselottes d'équilibrage (4) au niveau de la table porte-pièce (1) pour la compensation du défaut d'équilibrage et comportant un dispositif de commande et de réglage (14) servant à déterminer la position des masselottes d'équilibrage (4) au niveau de la table porte-pièce (1),
**caractérisé en ce que**
une rainure de réception (6) concentrique par rapport au point de rotation de la table porte-pièce (1), annulaire circulaire et dotée d'une contre-dépouille (7) est ménagée sous la surface de la table, **en ce que** les masselottes d'équilibrage (4) sont configurées dans leur forme géométrique extérieure de telle manière qu'elles sont guidées de manière mobile dans la rainure de réception (6) dotée de la contre-dépouille (7), sont pressées par une surface de contact (22) de la masselotte d'équilibrage (4) contre une arête de la contre-dépouille (7) et sont protégées contre toute chute dans une direction horizontale et verticale, et **en ce que** les masselottes d'équilibrage (4) peuvent être déplacées dans la rainure de réception (6) dans une position angulaire prédéfinie par le dispositif de commande et de réglage (14) et peuvent être fixées dans ladite position angulaire dans la rainure de réception (6) à force ou par complémentarité de formes.

2. Centre d'usinage vertical selon la revendication 1, **caractérisé en ce que** la table porte-pièce (1) peut être entraînée au moyen d'un moteur à couple.

3. Centre d'usinage vertical selon la revendication 1 ou 2, **caractérisé en ce que** la rainure de réception (6) est pourvue d'une contre-dépouille (7), est disposée sur la périphérie extérieure de la table porte-pièce (1) et est réalisée de manière périphérique.

4. Centre d'usinage vertical selon l'une quelconque des revendications 1 à 3, **caractérisé en ce que** le déplacement et la fixation des masselottes d'équilibrage (4) peuvent être exécutés de manière automatique.

5. Centre d'usinage vertical selon l'une quelconque des revendications précédentes, **caractérisé en ce que** le défaut d'équilibrage peut être déterminé par l'intermédiaire du dispositif de commande et de réglage (14), à l'aide d'un capteur d'accélération ou d'un capteur de vitesse, qui est disposé de préférence dans la poutre de pont (3).

6. Centre d'usinage vertical selon la revendication 5, **caractérisé en ce que** le capteur de vitesse fonctionne selon le principe de mesure électrodynamique.

7. Centre d'usinage vertical selon la revendication 6, **caractérisé en ce que** le capteur d'accélération est réalisé comme un capteur d'accélération piézoélectrique.

8. Centre d'usinage vertical selon la revendication 6, **caractérisé en ce que** le capteur d'accélération est réalisé comme un capteur d'accélération capacitif.

9. Centre d'usinage vertical selon l'une quelconque des revendications 1 à 8, **caractérisé en ce qu'**au moins un emplacement de chargement réalisé spécialement est ménagé dans la rainure de réception (6), par l'intermédiaire duquel des masselottes d'équilibrage (4) peuvent être introduites dans la rainure de réception (6).

10. Centre d'usinage vertical selon la revendication 9, **caractérisé en ce que** l'emplacement de chargement peut être fermé au moins en partie au moyen d'un dispositif de sécurité à insérer (17) de sorte que la masselotte d'équilibrage (4) ne peut pas sortir de manière non définie par l'emplacement de chargement.

11. Centre d'usinage vertical selon la revendication 10, **caractérisé en ce que** le dispositif de sécurité à insérer (17) est configuré sous la forme d'un boulon d'embrayage (18) actionné par ressort.

12. Centre d'usinage vertical selon l'une quelconque des revendications 1 à 11, **caractérisé en ce que** les masselottes d'équilibrage (4) sont protégées contre tout déplacement par coulissement dans la rainure de réception (6) à force ou par complémentarité de formes grâce à un élément de fixation (28) actionné par ressort, disposé au niveau des masselottes d'équilibrage (4).

13. Centre d'usinage vertical selon l'une quelconque des revendications précédentes 1 à 11, **caractérisé en ce que** les masselottes d'équilibrage (4) sont protégées contre tout déplacement par coulissement à force ou par complémentarité de formes dans la rainure de réception (6) grâce respectivement à une vis de fixation (5) disposée au niveau des masselottes d'équilibrage (4).

14. Centre d'usinage vertical selon l'une quelconque des revendications précédentes 1 à 13, **caractérisé en ce que** les masselottes d'équilibrage (4) peuvent être retirées ou découplées de la rainure de réception (6) de la table porte-pièce (1) rotative par l'intermédiaire d'une unité de cylindre piston (26) pouvant être déplacée de manière hydraulique ou pneumatique, qui est disposée de préférence dans la poutre de pont (3) de telle sorte que la table porte-pièce (1) peut être soumise à une torsion par rapport à la masselotte d'équilibrage (4).

15. Centre d'usinage vertical selon l'une quelconque des revendications précédentes 1 à 14, **caractérisé en ce que** la masselotte d'équilibrage (4) possède une surface de contact (22) venant en prise avec la contre-dépouille (7) de la rainure de réception (6) et présentant un coefficient de friction relativement important de telle sorte qu'une adhérence de formes peut être réalisée avec des forces de pression relativement faibles entre la masselotte d'équilibrage (4) et la rainure de réception (6).

16. Centre d'usinage vertical selon l'une quelconque des revendications précédentes 1 à 14, **caractérisé en ce que** l'élément de fixation (28) actionné par ressort possède une surface de contact (31) venant en prise avec la contre-dépouille (7) de la rainure de réception (6) et présentant un coefficient de friction relativement faible de telle sorte que la table porte-pièce (1) peut glisser sans problème sur l'élément de fixation (28) à ressort dans l'état désaccouplé, dans lequel la masselotte d'équilibrage (4) est retirée de la rainure de réception (6) et est reliée à la poutre de pont (3) de manière fixe par l'intermédiaire de l'unité piston cylindre (26).

17. Centre d'usinage vertical selon l'une quelconque des revendications précédentes 1 à 16, **caractérisé en ce que** le système de mesure servant à déterminer le nombre de tours et/ou la position angulaire de la table porte-pièce (1) est réalisé comme un transmetteur de vitesse (9) et peut être placé au niveau de l'arbre d'entraînement de la table porte-pièce (1).
